# EUROPEAN PATENT APPLICATION

(11) **EP 4 759 490 A1**
(43) Date of publication of application: **17.06.2026**
(21) Application number: 25222844.0
(22) Date of filing: 12.12.2025
(51) Int. Cl.: B25J 9/16, A01D 46/30

(54) **HANDLING PLANTS USING IMAGE DATA**

(30) Priority: 16.12.2024 SE 2451286
(71) Applicant: Södra Skogsägarna Ekonomiska Förening, 351 89 Växjö (SE)
(72) Inventor: Olsson, Oskar, 362 32 Tingsryd (SE); Henriksson, Johan, 311 79 Falkenberg (SE); Axelsson, Emil, 313 50 Åled (SE); Törnberg, Christoffer, 567 30 Vaggeryd (SE); Ilisic, Marko, 332 33 Gislaved (SE); Gyllensvärd, Mattias, 331 42 Värnamo (SE)
(74) Representative: Valea AB

(57) **Abstract**

A method for handling plants in a plant handling arrangement (1) is provided. A plurality of plants (30) are present within a gripping area (20) of the plant handling arrangement (1). The method comprises, based on image data of the plurality of plants (30), identifying a candidate plant (31) and a root (31r) of the candidate plant (31). The method comprises determining a gripping position of the identified candidate plant (31). The method comprises triggering the robot arm (40) to grip the candidate plant (31) based on the determined gripping position. The method comprises triggering the robot arm (40) to carry the candidate plant (31) to a coating area (75) of the plant handling arrangement (1) for applying a coating to the candidate plant (31). The method comprises triggering the robot arm (40) to place the candidate plant (31) in a placement area (25).

## Description

### TECHNICAL FIELD

Embodiments herein relate to handling plants in a plant handling arrangement. A control unit and a method is provided for handling the plants. Furthermore, a plant handling arrangement, a computer program and a carrier are also provided herein. In some aspects, embodiments herein relate to handling the plants in the plant handling arrangement by using image data for identifying a candidate plant, and relating to triggering a robot arm to carry the candidate plant to a coating area and placing said candidate plant in a placement area

### BACKGROUND

To ensure efficient and productive plant management, in particular relating to handling saplings, plants need to be handled in an efficient but careful manner such that they are not damaged. Each plant is sensitive and may be prone to damage unless handled in a delicate manner. Therefore, when handling plants such as selecting plants, applying needed coating to the plants for mitigating diseases or pests, packing plants, and planting the plants, these tasks are performed completely manually, or performed at least partially manually by an expert by inserting the plants into dedicated separated containers such that some automation can be performed with regards to the dedicated separate containers. However, such automated approaches may have many issues which cause them to not be of widespread use. For example, the automated devices may be limited in their capabilities, manual processing for preparing the plants for automation is time-consuming, and plants may still be prone to damages if handled improperly. Hence, there is a strive to improve efficiency of handling plants.

### SUMMARY

As a part of developing embodiments herein, issues in contemporary plant management were identified by the inventors and will first be discussed. Handling plants, such as packing and coating the plants, by the use of individual containers for each plant, e.g., pots, racks, capsules or cassettes, is time-consuming, requires excessive space, and may relate to very monotonous work tasks to prepare the plants for their individual containers. This is both since the packing procedure may be slow as it may need manual labor, but may also need more space due to the size of the pots, racks, capsules and/or cassettes. Furthermore, when a plant has been coated and packed, an empty individual container will remain, and if said container has been part of a coating procedure, it may need cleaning before it can be used again. Thes containers may further take up a lot of valuable space, limiting the number of plants that can be handled for any work site.

The above plant handling issues may pertain to any kind of plant handling, but may be more apparent when handling tree plants, i.e. tree saplings, where a lot of trees may need to be handled within the same time period, and where said trees may need a certain type of coating for protection or other suitable improvement needed for a specific tree plant type.

An object of embodiments herein is to improve efficiency of handling plants.

According to a first aspect of embodiments herein, the object is achieved by providing a method for handling plants in a plant handling arrangement. The plant handling arrangement comprises a robot arm for gripping plants from a gripping area of the plant handling arrangement. The plant handling arrangement comprises at least one first camera for monitoring the gripping area. In examples herein, a plurality of plants are present within the gripping area.

The method comprises obtaining first image data from the at least one first camera. The first image data is indicative of the gripping area. This means that the first image data further indicates the plurality of plants. The first image data may be a photo, a video, or any other suitable manner of encoding imagery of the gripping area.

The method comprises identifying, based on the obtained first image data, a candidate plant among the plurality of plants. The method further comprises identifying, based on the obtained first image data, a root of the candidate plant.

The method comprises determining a gripping position of the identified candidate plant. The gripping position is a position of the root of the candidate plant or a position relative to the root of the candidate plant.

The method comprises triggering the robot arm to grip the candidate plant based on the determined gripping position.

The method comprises triggering the robot arm to carry the candidate plant to a coating area of the plant handling arrangement, and to position the root of the candidate plant in a predefined position for applying a coating to the candidate plant.

The method comprises triggering the robot arm to place the candidate plant in a placement area.

In embodiments, method comprises obtaining first sensor data from at least one first sensor. The first sensor data is indicative of the gripping area. This means that the first sensor data further indicates the plurality of plants. The method then comprises identifying, based on the obtained first sensor data, a candidate plant among the plurality of plants. The method further comprises identifying, based on the obtained first sensor data, a root of the candidate plant. The method further comprises determining a gripping position of the identified candidate plant, for example based on the obtained sensor data. The gripping position is a position of the root of the candidate plant or a position relative to the root of the candidate plant. The method further comprises triggering the robot arm to grip the candidate plant based on the determined gripping position. The method comprises triggering the robot arm to carry the candidate plant to a coating area of the plant handling arrangement, for example based on the sensor data, and to position the root of the candidate plant in a predefined position for applying a coating to the candidate plant. Thus, the method comprises triggering the robot arm to place the candidate plant in a placement area.

In embodiments, the method further comprises obtaining, prior to coating a candidate plant and by a control unit of the plant handling arrangement, second set of data indicative of the grip of the robot arm with respect to the candidate plant, wherein said obtaining of the second set of data by the control unit is performed so that the control unit can verify, based on the obtained second image data, whether the grip is deemed to be sufficient to be able to coat and place the candidate plant and/or in response to a re-grip of the candidate plant.

In certain embodiments, the second set of data is obtained/acquired by the same at least one first camera. In other embodiments, the second set of data is obtained/acquired by at least one second camera. In yet other embodiments, the second set of data is obtained/acquired by a sensor of the of the plant handling arrangement.

In embodiments, the method further comprises obtaining/acquiring, by at least one of a camera and a sensor and prior to coating a candidate plant, a second set of data indicative of the grip of the robot arm with respect to the candidate plant, wherein said obtaining of the second set of data is performed to verify if the grip is deemed to be sufficient to be able to coat and place the candidate plant and/or in response to a re-grip of the candidate plant.

The method may then further comprise the step of verifying, by a control unit of the plant handling arrangement and based on the second set of data obtained by the control unit, whether the grip is deemed to be sufficient to be able to coat and place the candidate plant and/or in response to a re-grip of the candidate plant. The second set of data may then comprise image data obtained/acquired by at least one of at least one camera of the plant handling arrangement that is configured to obtain image data and/or sensor data obtained/acquired by at least one sensor of the plant handling arrangement that is configured to obtain sensor data.

The method may then further comprise, in response to determining, by the control unit and based on the second set of data, whether the grip is not sufficient to be able to coat and place the candidate plant, and, in response to determining that the grip is not sufficient to be able to coat and place the candidate plant: triggering, by the control unit, the robot arm that performed the initial grip to re-grip the candidate plant.

In embodiments, the method further comprises obtaining, prior to coating a candidate plant and by a control unit of the plant handling arrangement, second image data indicative of the grip of the robot arm with respect to the candidate plant, wherein said obtaining of the second image data by the control unit is performed so that the control unit can verify, based on the obtained second image data, whether the grip is deemed to be sufficient to be able to coat and place the candidate plant and/or in response to a re-grip of the candidate plant.

In embodiments, the second image data may then be obtained/acquired by the same at least one first camera. In other embodiments, the second image data may be obtained/acquired by at least one second camera. The method may then further comprise the step of verifying, by a control unit of the plant handling arrangement and based on the second set of data obtained by the control unit from the at least one first camera and/or from a second at least one second camera, whether the grip is deemed to be sufficient to be able to coat and place the candidate plant and/or in response to a re-grip of the candidate plant.

In embodiments, the method further comprises obtaining, after having obtained the first image data from the at least one first camera and prior to coating a candidate plant, sensor data indicative of the grip of the robot arm with respect to the candidate plant, wherein said obtaining of the sensor data is performed to verify if the grip is deemed to be sufficient to be able to coat and place the candidate plant and/or in response to a re-grip of the candidate plant. The sensor data may then be obtained by at least one sensor. The plant handling arrangement may then comprise the at least one sensor arranged for verifying if the grip is deemed to be sufficient to be able to coat and place the candidate plant and/or in response to a re-grip of the candidate plant.

The method may then further comprise, in response to determining, by the control unit and based on the obtained sensor data, whether the grip is not sufficient to be able to coat and place the candidate plant, and, in response to determining that the grip is not sufficient to be able to coat and place the candidate plant: triggering, by the control unit, the robot arm that performed the initial grip to re-grip the candidate plant.

In embodiments herein, the plant handling arrangement comprises at least one first sensor for monitoring the gripping area. The method comprises obtaining first sensor data from at least one first sensor for monitoring the gripping area. The first sensor data is indicative of the gripping area. This means that the first sensor data further indicates the plurality of plants. The first image data may be obtained by any type of sensor.

The method comprises identifying, based on the obtained first sensor data, a candidate plant among the plurality of plants. The method further comprises identifying, based on the obtained first sensor data, a root of the candidate plant and may comprise determining a gripping position of the identified candidate plant. The gripping position is a position of the root of the candidate plant or a position relative to the root of the candidate plant. The method may comprise triggering the robot arm to grip the candidate plant based on the determined gripping position.

The method may also comprise triggering the robot arm to carry the candidate plant to a coating area of the plant handling arrangement, and to position the root of the candidate plant in a predefined position for applying a coating to the candidate plant.

The method comprises triggering the robot arm to place the candidate plant in a placement area. According to a second aspect of embodiments herein, the object is achieved by providing a control unit configured to handle plants in a plant handling arrangement. The plant handling arrangement comprises a robot arm for gripping plants from a gripping area of the plant handling arrangement. The plant handling arrangement comprises at least one first camera for monitoring the gripping area. A plurality of plants are present within the gripping area.

The control unit is configured to:
- obtain first image data from the at least one first camera, the first image data being indicative of the gripping area,
- identify, based on the obtained first image data, a candidate plant among the plurality of plants,
- identify, based on the obtained first image data, a root of the candidate plant,
- determine a gripping position of the identified candidate plant, the gripping position being a position of the root of the candidate plant or a position relative to the root of the candidate plant,
- trigger the robot arm to grip the candidate plant based on the determined gripping position,
- trigger the robot arm to carry the candidate plant to a coating area of the plant handling arrangement, and to position the root of the candidate plant in a predefined position for applying a coating to the candidate plant; and
- trigger the robot arm to place the candidate plant in a placement area.

In embodiments, the control unit is further configured to receive, prior to coating a candidate plant, second image data indicative of the grip of the robot arm with respect to the candidate plant, wherein said received second image data is obtained to verify if the grip is deemed to be sufficient to be able to coat and place the candidate plant and/or in response to a re-grip of the candidate plant. The second image data may then be obtained from the same at least one first camera or may be obtained from at least one second camera. The control unit may then be configured to, in response to determining that the grip is not sufficient to be able to coat and place the candidate plant: trigger a robot arm to re-grip the candidate plant.

In embodiments, the control unit is further configured to verify, based on the second set of image data obtained by the control unit from the at least one first camera and/or obtained from a second at least one second camera, whether the grip of the robot arm with respect to a candidate plant is deemed to be sufficient to be able to coat and place the candidate plant and/or in response to a re-grip of the candidate plant. If the grip is deemed, by the control unit and based on the second set of image data, not to be sufficient to be able to coat and place the candidate plant, the control unit may be configured to trigger the robot arm that performed the initial grip to re-grip the candidate plant.

In embodiments, the control unit is further configured to receive or obtain, prior to coating a candidate plant, sensor data indicative of the grip of the robot arm with respect to the candidate plant, wherein said sensor data is received or obtained by the control unit to verify if the grip is deemed to be sufficient to be able to coat and place the candidate plant and/or in response to a re-grip of the candidate plant. If the grip is deemed, by the control unit and based on obtained sensor data, not to be sufficient to be able to coat and place the candidate plant, the control unit may be configured to trigger a robot arm to re-grip the candidate plant. In embodiments, the control unit may then be configured to, in response to determining that the grip is not sufficient to be able to coat and place the candidate plant: trigger a robot arm to re-grip the candidate plant, for example be configured to trigger the robot arm that performed the initial grip to re-grip the candidate plant. In certain embodiments, the sensor data may then be obtained from at least one second sensor different from at least one first sensor for monitoring the gripping area.

In embodiments, the control unit is further configured to verify, based on the sensor data obtained by the control unit from at least one sensor of the plant handling arrangement, whether the grip of the robot arm with respect to a candidate plant is deemed to be sufficient to be able to coat and place the candidate plant and/or in response to a re-grip of the candidate plant. The sensor data may then be obtained by the control unit from at least one second sensor different from at least one first sensor for monitoring the gripping area. In embodiments, the control unit may then be configured to, in response to determining, based on the obtained sensor data, that the grip is not sufficient to be able to coat and place the candidate plant: trigger a robot arm to re-grip the candidate plant, for example be configured to trigger the robot arm that performed the initial grip to re-grip the candidate plant. In certain embodiments, the sensor data may then be obtained from at least one second sensor different from at least one first sensor for monitoring the gripping area.

According to a third aspect of embodiments herein, the object is achieved by providing a plant handling arrangement comprising a robot arm for gripping plants from a gripping area of the plant handling arrangement. The plant handling arrangement further comprises at least one first camera for monitoring the gripping area. The plant handling arrangement comprises and/or is controlled by the control unit according to the second aspect.

It is furthermore provided herein a computer program comprising instructions, which, when executed by a processor, cause the processor to carry out the method of the first aspect. It is additionally provided herein a carrier, having stored thereon a computer program product comprising instructions which, when executed by the processor, cause the processor to carry out the method according to the first aspect.

According to embodiments and to achieve an improved efficiency of handling plants, the plant handling arrangement is provided that incorporates a plurality of robot arms capable of operating concurrently, for example in opposition between various processing areas, including a gripping area, coating area, and placement area. Each robot arm may include multiple gripping members, enabling simultaneous multi-plant handling.

According to embodiments, the object of improving efficiency of handling plants is achieved by a plant handling arrangement provided with a plurality of robot arms. In certain embodiments, the plant handling arrangement comprises at least two robot arms arranged and configured to move in opposition, for example at least two robot arms configured to move between a gripping area and a coating area and/or configured to move in opposition between a coating area and a placement area. Each of the plurality of robot arms may then be provided with a plurality of gripping members and the gripping members of the different robot arms may simultaneously perform different gripping operations and movements.

Image data obtained from at least one first camera is processed to identify a candidate plant among a plurality of plants and to identify a root portion of the candidate plant for each of the plurality of robot arms. The control unit may then trigger each of the plurality of robot arms to grip the candidate plant based on the identified gripping position. Each of the plurality of robot arms may then be further triggered to transport the plant to a coating area and to position the identified root at a predefined location for application of a coating material. Prior to coating, a second set of image or sensor data may be acquired to verify grip sufficiency or detect whether re-gripping has occurred for each of the plurality of robot arms.

In embodiments, the control unit may then be configured to verify grip sufficiency or detect whether re-gripping has occurred at least partly based on a second set of image data obtained from the at least one first camera or obtained from at least one second camera of the plant handling arrangement. In embodiments, the control unit may then be configured to verify grip sufficiency or detect whether re-gripping has occurred at least partly based on sensor data obtained from at least one sensor of the plant handling arrangement.

Since the candidate plant and the root of the candidate plant can be identified based on the first image data, it is possible to determine the gripping position such that the candidate plant can be gripped by the robot arm without any manual intervention. This means that no preparatory handling of the plants are necessary and instead, the robot arm can proceed with carrying the candidate plant to the coating area for coating the candidate plant. Once coated, the candidate plant can be placed by the robot arm in the placement area. Thereby a fully automated process of handling the candidate plant is achieved, where not manual intervention of preparing the plants into separate containers such as into different racks is needed. This means that efficiency of handling plants is significantly increased since the process can be fully automated without risking damaging plant.

The above-mentioned aspects will further be discussed below with a number of examples and embodiments. All examples discussed below are applicable to any of the above-mentioned aspects in any suitable manner. All benefits or effects for any of the aspects apply for the other aspect in a corresponding manner.

### BRIEF DESCRIPTION OF THE DRAWINGS

- **Fig. 1**: is a schematic block diagram illustrating embodiments of a plant handling arrangement.
- **Fig. 2**: is a flowchart depicting an embodiment of a method of embodiments herein.
- **Figs. 3a-b**: are diagrams illustrating example plants.
- **Fig. 4**: is a diagram illustrating an example placement area.
- **Figs. 5a-b**: are diagrams illustrating example image data.
- **Fig. 6**: is a diagram illustrating an example robot arm.
- **Fig. 7**: is a diagram illustrating an example plant handling arrangement.
- **Fig. 8**: is a diagram illustrating an example plant handling arrangement.
- **Fig. 9**: is a diagram illustrating an example according to embodiments herein.
- **Fig. 10**: is a schematic block diagram illustrating embodiments of a control unit.

### DETAILED DESCRIPTION

As summarized when handling plants, in particular tree plants, coating the plants to protect them from insects such as from a *Hylobius abietis,* pine weevil, may be necessary to for the plants to survive long term. In these examples, the coating may comprise wax. Other reasons to coat plants may also apply for example animal repellent for avoiding the plants being eaten by animals. For example, the coating may comprise any suitable compound repelling animals, e.g., capsicum. Further, the plants may need to be strategically packed or otherwise placed in strategic areas to improve handling such as planting the coated plants The above-mentioned actions are typically performed either completely manually, or by first manually placing the plants in respective individual containers, and then coating the plants by handling their respective container. As discussed above, there are many issues with using such containers, primarily in waste of resources but also waste of time due to requiring the individual containers to be packed manually.

To solve or at least alleviate some of these issues, example herein relate to using image data to handle a plant by a robot arm such that a candidate plant may gripped by the robot arm, moved to be coated and placed in an area such as to be packed in a suitable container. This means that plant handling in this aspect may be significantly improved in terms of efficiency, as handling of plants as performed in examples herein may be completely automated.

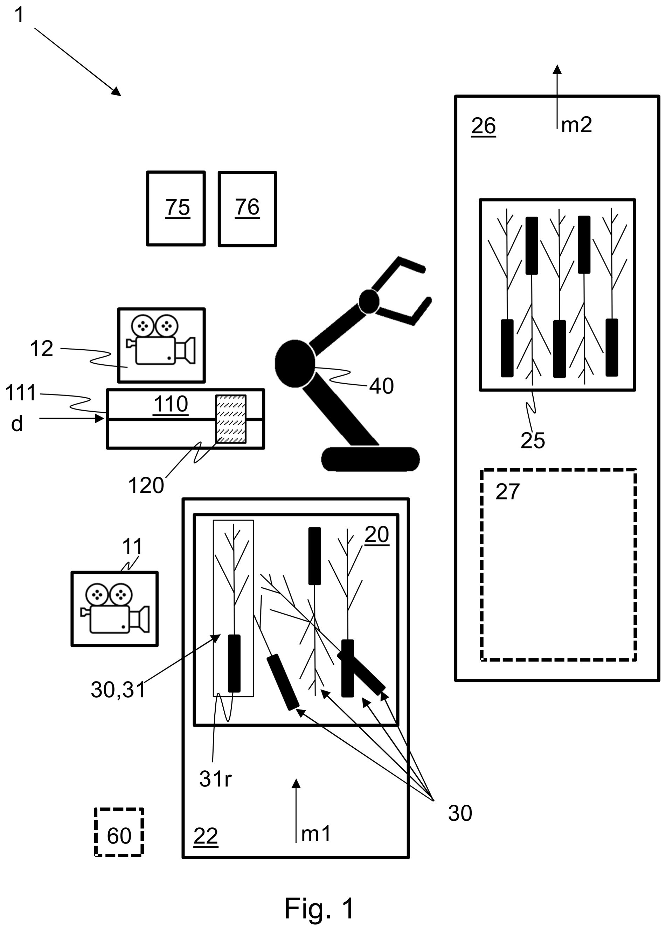

**Fig. 1** illustrates a **plant handling arrangement 1** according to examples herein.

The plant handling arrangement 1 may be any suitable arrangement of components for handling plants, in particular tree plants. The tree plants handled by the tree plant handling arrangement 1 may be any suitable tree plants. Some examples herein may in particular relate to handling conifers and/or broadleaf species, e.g., spruce or other pine trees. However, examples herein are not limited to any specific tree species.

The plant handling arrangement 1 and all relevant entities illustrated in Fig. 1 or in any subsequent figures may be oriented in any suitable manner such that in implementing examples herein, different features or parts may be rotated in any suitable manner such as by 180 degrees.

The plant handling arrangement 1 comprises a **gripping area 20.** In examples herein, a **plurality of plants 30** is present in the gripping area 20. In other words, the plurality of plants 30 are arranged in the gripping area 20. The plurality of plants 30 may be freely arranged in the gripping area 20 which means that the plurality of plants may be entangled, lay in different orientations, lay on top of each other, lay next to each other, in a heap or pile, or in any type of mix. This is since the ordering of the plurality of plants 30 may not be of importance of examples herein.

The plant handling arrangement 1 comprises **at least one first camera 11.** The at least one first camera 11 is for monitoring the gripping area 20. In other words, the gripping area 20 may be in the field of view of the at least one first camera 11. The at least one first camera 11 may be arranged to monitor the plurality of plants 30 in the gripping area 20. The at least one first camera 11 may be or comprise any suitable camera which can produce image data such that it is possible to determine a position of plants of the plurality of plants 30, e.g., by use of image data. In particular examples, the at least one first camera 11 may be or comprise a three-dimensional (3D) camera or any other suitable camera which may be able to sense depth. In some scenarios, the at least one first camera 11 may be a single camera directed towards the gripping area 20, or in other scenarios, the at least one first camera 11 may be a set of cameras directed towards the gripping area 20 in different angles, e.g., which may improve depth estimation.

In embodiments, the at least one first camera 11 may, in addition to monitoring the gripping area 20, also be configured to verify that a grip of a candidate plant 31 is sufficient for coating. The at least one first camera 11 may then be arranged and configured for monitoring or verifying a grip of the robot arm 40 of the candidate plant 31, e.g., subsequent to moving the candidate plant 31 through the groove and prior to coating.

Instead of at least one first camera 11, the handling arrangement 1 may comprise at least one sensor that is configured and arranged for monitoring the gripping area 20. The at least one sensor may then be arranged and configured to monitor the plurality of plants 30 in the gripping area 20. The at least one sensor may comprise any type of sensor which can obtain a first set of sensor data such that it is possible to determine a position of plants of the plurality of plants 30, e.g., by use of the obtained first set of sensor data.

In certain embodiments, the plant handling arrangement 1 may further comprise at least one second sensor that is arranged for monitoring or verifying a grip of the robot arm 40 of a candidate plant 31, e.g., subsequent to moving the candidate plant 31 through the groove and prior to coating. The second set of sensor data obtained by the at least one second sensor for monitoring or verifying a grip of the robot arm 40 of a candidate plant 31 may be a different set of sensor data from the first set of sensor data obtained by the at least one first sensor for monitoring the gripping area 20.

The plant handling arrangement 1 further comprises a **robot arm 40.** The robot arm 40 is arranged for gripping a candidate plant 31 from the gripping area 20 of the plant handling arrangement 1. The candidate plant 31 may typically be gripped in, or relative a root 31r of the candidate plant 31. After being gripped, the robot arm40 may be triggered to move the candidate plant 31 to be coated and packed, and then a new candidate plant may be gripped and picked up from the gripping area 20.

The gripping area 20 may be one out of multiple possible gripping areas and/or may be an area associated with a section of one or more conveyor belts 22 of the plant handling arrangement 1. The gripping area 20 may be an open section of a conveyor belt or may be a box or other shared area. In the example of Fig. 1, it may be possible to move plants towards the gripping area 20 by controlling a **motion m1** of the one or more conveyor belts 22.

The plant handling arrangement 1 further comprises a **coating area 75.** The coating area 75 may be an area where the robot arm 40 can carry the candidate plant 31 for coating. In the coating area 75, the candidate plant 31 may be sprayed or dipped with any suitable coating, such as a wax. In other words, the coating area 75 may comprise a coating arrangement, e.g., wherein the coating arrangement comprises a nozzle for spraying wax and/or an arrangement or container for dipping the candidate plant 31 into wax to perform the coating. The wax in examples herein may be any suitable wax.

The wax may in particular help from preventing weevils from climbing and/or damaging the candidate plant 31 when planted. As wax may be hot, the plant handling arrangement 1 may further comprise a **cooling area 76,** where the robot arm 40 may carry the candidate plant 31 immediately after coating such as to cool the candidate plant 31 for avoiding any damages from hot coating, e.g., wax. In other words, the cooling area 76 may comprise water for dipping the candidate plant 31 into after the coating, if applicable. Any other cooling method at the cooling area 76 may also apply.

As part of some examples herein, to ensure that there are no plants entangled with the candidate plant 31, the plant handling arrangement 1 may comprise a **solid member 110.** The solid member 110 may comprise a **groove 111,** preferably V-shaped or U-shaped groove such that when the candidate plant 31 is moved along a bottom-section of the groove 111, e.g., along a direction d, any entanglement of the candidate plant 31 may fall off.

The plant handling arrangement 1 may further comprise a **re-gripping area 120,** e.g., such as part of the solid member 110. The re-gripping area may be a hollow part of the solid member 110 where the root 31r of the candidate plant 31 may be rested and may be arranged to have a size according to a predefined size or characteristics of roots of the plurality of plants 30. The candidate plant 31 may be dropped in the re-gripping area 120 and the robot arm 40 may again grip the candidate plant 31 to ensure that it has a suitable grip, e.g., correct location, or orientation, etc.

To verify that a grip of the candidate plant 31 is sufficient for coating, the plant handling arrangement 1 may comprise at least one second camera 12. The at least one second camera 12 may be arranged for monitoring or verifying a grip of the robot arm 40 of the candidate plant 31, e.g., subsequent to moving the candidate plant 31 through the groove and prior to coating. Similar to the at least one first camera 11, the at least one second camera 12 may be a depth perceiving camera, e.g., a 3D camera, or multiple cameras for such purpose. However, for the verification of the at least one second camera 12, any conventional camera may also apply. In particular examples herein, the at least one first camera 11 comprises or consists of a 3D camera, i.e., a camera which can measure depth. In these particular examples the at least one second camera 12 comprises or consists of a two-dimensional (2D) camera, e.g., without capabilities to measure depth.

Instead of at least one second camera 12, the handling arrangement 1 may comprise at least one sensor that is configured and arranged for monitoring or verifying a grip of the robot arm 40 of the candidate plant 31, e.g., subsequent to moving the candidate plant 31 through the groove and prior to coating. The method may then comprise obtaining sensor data from at least one sensor of the plant handling arrangement 1. The sensor data may be indicative of the candidate plant 31 and the root 31r of the candidate plant 31. The sensor data may further be indicative of a grip of the robot arm 40 with respect to the candidate plant 31. In particular, obtaining the sensor data may be performed in response to a re-grip of the candidate plant, but may also be performed to verify if the grip is deemed to be sufficient to be able to coat and place the candidate plant.

After coating, and potential cooling in the cooling area 76, the robot arm 40 may place the candidate plant 31 in **a placement area 25.** The placement area 25 may be one of multiple placement areas, e.g., there may be an alternative placement area 27. The placement area 25 may be a container such as a box. The placement area 25 may be situated in a section of a conveyor belt, and in some examples herein, the conveyor belt may move or may be able to operate to move with a **motion m2,** such that when the placement area 25 is packed with plants, a new placement area may be available such as the alternative placement area 27.

The robot arm 40 may suspended from a location above the gripping area 20. In other words, the robot arm 40 may be mounted from a ceiling or other structure above the plurality of plants 30. Due to being in the location above, when gripping a plant, the robot arm 40 is never in the way for any other entangled plants that may drop to the ground or back to the gripping area 20 as part of lifting a plant out of the gripping area. This allows any cleanup process or recollection of dropped plants to be more efficient.

In some examples, the plant handling arrangement 1 comprises and/or is controlled by a **control unit 60.** The control unit 60 may be able to instruct the robot arm 40 how to actuate and how to grip a plant of the plurality of plants 30, how to move or orient said plant, and how to place or release said plant. The control unit 60 may further be able to obtain image data of the at least one first camera 11 and to process said image data. In other words, the control unit 60 may be able to control and/or may be communicatively coupled with any suitable entity of examples herein. In examples herein, the control unit 60 may comprise a processor or other processing capabilities for processing image data and/or for instructing or triggering the robot arm 40 to operate.

The control unit 60 may be comprised in any suitable part of the plant handling arrangement 1, and/or may be arranged as a remote unit.

The control unit 60 may be as a single control unit or a distributed control unit.

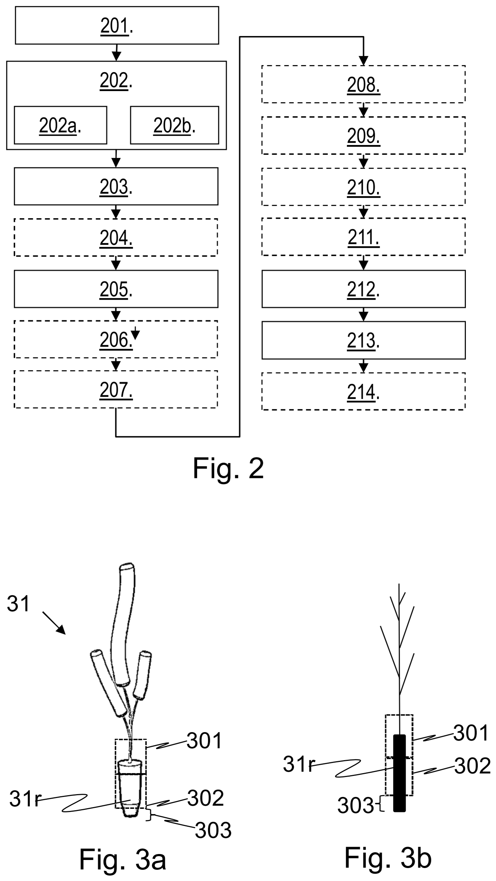

**Fig. 2** illustrates a flowchart of a method for handling plants in the plant handling arrangement 1. The plant handling arrangement 1 comprises the robot arm 40 for gripping plants from the gripping area 20 of the plant handling arrangement 1. The plant handling arrangement 1 comprises the at least one first camera 11 for monitoring the gripping area 20. The plurality of plants 30 are present within the gripping area 20. The method comprises the following actions which may be taken in any suitable order. Dashed boxes in Fig. 2 may indicate optional actions. The method may be performed by the control unit 60, i.e., the control unit 60 may be configured to perform the method as discussed below. In below actions, where actions of triggering the robot arm 40 are discussed may comprise issuing instructions which operate the robot arm 40 according to the triggering action.

### Action 201

The method comprises obtaining first image data from the at least one first camera 11. The first image data is indicative of the gripping area 20. The first image data may further be indicative of the plurality of plants 30. The first image data may be a photograph, e.g., as a digital photo, or video, or any other suitable data for representing an image of the plurality of plants 30 in the gripping area 20. Typically, the first image data is indicative of depth information of the plurality of plants 30 in the gripping area 20.

### Action 202

The method comprises two actions 202a and 202b as discusses below, which actions may be performed jointly as one action, or individually.

### Action 202a

The method comprises identifying, based on the obtained first image data, the candidate plant 31 among the plurality of plants 30.

Identifying the candidate plant 31 may comprise identifying a number of plants of the plurality of plants 30, and further selecting a plant of the identified number of plants to be the candidate plant 31. The selection may be based on any suitable heuristics, such as the plant with the highest altitude, the plant which have least amount of entanglement with other plants, the plant which have most identifiable characteristics in the image data, or the plant which is be the first or only identified plant.

Based on the first image data herein may mean that the first image data is used as an input for identifying the candidate plant such as by using machine learning and/or where the first image data is used for image analysis to identify the candidate plant.

Identifying the candidate plant 31 may comprise matching the first image data with a predefined shape and/or characteristics of a plant.

Identifying the candidate plant 31 may comprise identifying the root 31r of the candidate plant 31r, and further identifying an orientation of a stem of the candidate plant 31.

In other words, identifying the candidate plant 31 may comprise identifying a predetermined plant shape from the first image data, e.g., a cylinder of a certain size representing the root 31r, and with a corresponding stem oriented in a direction of the root 31r.

### Action 202b

The method comprises identifying, based on the obtained first image data, a root 31r of the candidate plant 31. Identifying the root 31r of the candidate plant 31 may be performed at the same time as when identifying the candidate plant 31, or as a preceding step or subsequent step. In some embodiments, identifying the candidate plant 31 may initiate by identifying the root 31r, and then identifying the orientation of the candidate plant 31 and where the stem is directed from the root 31r.

Identifying the root 31r of the candidate plant 31 may comprise matching the first image data with a predefined shape and/or characteristics of a root. In particular, identifying the root 31r of the candidate plant may relate to attempting to match features of the first image data with a predefined root shape, e.g., a cylindrical or approximately cylindrical shape of a predetermined size.

Based on the first image data herein may mean that the first image data is used as an input for identifying the root 31r of candidate plant such as by using machine learning and/or where the first image data is used for image analysis to identify the root 31r of candidate plant.

In other words, identifying the root 31r of the candidate plant 31 may comprise identifying a predetermined plant shape or a predetermined root shape from the first image data, e.g., a cylinder of a certain size.

The two actions 202a and 202b, may identify the candidate plant 31 and its root 31a using any suitable method or image analysis.

For both actions 202a and 202b, the identification may be trained, configured, or tuned for a specific type of plant, such that features for identifying the candidate plant 31 relates to specific features of a type or species of the plant to be identified. For example, for some species or families of plants, a root may be approximated as a cylinder of a certain size and the root 31r may thereby be identified by said feature. For other plants, species or families, the root may have a different shape, a stem may be of a certain size, branches may have a distinct feature, etc.

In some embodiments, identifying the root 31r and/or the candidate plant 31 comprises identifying a predetermined plant shape from the first image data by matching one or more features of the predetermined plant shape with the first image data. For example, the one or more features may be one or more features of the root 31r to identify in the first image data. The one or more features of the predetermined plant shape may for example comprise any one or more out of:
- a predefined size parameter, e.g., length, circumference, a 3D size, and/or a 2D projection size,
- a 3D shape of at least a part of the predetermined plant shape, e.g., a cylinder shape, or other shape, representing a root of a plant, and
- a 2D shape of a cross-section or a side of at least a part of the predetermined plant shape, e.g., for comparison/matching with a cross-section or height data of the first image data,
- a 2D representation of the predetermined plant shape, e.g., wherein matching the one or more features comprises comparing a contrast and/or color difference between the predetermined plant shape and the first image data,
- transplanting or grifting features, e.g., features that may appear on plants if the plant has been transplanted or grifted,
- features appearing by being cultivated by a specific method,
- species-specific features of the plant, such as needles or leaves.

In other words, identifying the candidate plant 31 out of the plurality of plants 30 may comprise searching the first image data for a match with the one or more features, e.g., with respect to some error margin.

Matching the one or more features of the predetermined plant shape with the first image data may further comprise estimating an error margin of the one or more features, and wherein identifying the candidate plant 31 and/or the root 31r may be performed based on the estimated error margin. For example, the candidate plant 31 and/or the root 31r may be identified if the error margin fulfils a success condition, such as, the error margin is below a threshold.

### Action 203

The method comprises determining a gripping position of the identified candidate plant 31. The gripping position is a position of the root 31r of the candidate plant 31 or a position relative to the root 31r of the candidate plant 31.

The gripping position may be determined to be any suitable part of the candidate plant 31 for the robot arm 40 to be able to grip and carry the candidate plant 31 to the coating area 75.

As an example, the gripping position 31 may preferably be at any position of the root 31r, such as an estimated center position of the root 31r or at a position of the root 31r distanced by at least a predefined distance from an end-point of the root 31r. The predefined distance may be from 1, and up to 2 centimeters which distance have proven to produce a good grip of plants. Gripping the candidate plant 31 in its root 31r may often be best in terms of not damaging the candidate plant 31 and may still offer a possibility for a firm grip, in particular when the candidate plant 31 is a tree plant. However, in examples herein, it may further be possible to grip the candidate plant 31 in any suitable manner as long as the candidate plant 31 is not damaged, and as long as it is possible to coat any suitable part of the candidate plant 31.

### Action 204

The method may comprise determining, based on the first image data and the gripping position, a robot arm 40 position and robot arm 40 orientation for the robot arm 40 to assume when gripping the candidate plant 31.

The robot arm 40 position and orientation may need to be such that the robot arm 40 may grip the candidate plant 31 in the gripping position by a predetermined angle such as 90 degrees or within an interval thereof. For example, the robot arm 40 position and orientation may be such that the robot arm 40 is orthogonal, within an error margin, to the candidate plant 31. The robot arm 40 position and orientation may be such that the robot arm 40 grips candidate plant 31 from vertically above the robot arm 40.

### Action 205

The method comprises triggering the robot arm 40 to grip the candidate plant 31 based on the determined gripping position. Triggering the robot arm 40 to grip the candidate plant 31 based on the determined gripping position may comprise triggering the robot arm 40 to grip the candidate plant 31 in the determined gripping position. A set error margin may apply for the grip, i.e., that the robot arm 40 may misalign the grip within an error margin.

As an example, triggering the robot arm 40 to grip the candidate plant 31 may be based on the determined robot arm 40 position and robot arm 40 orientation, i.e., the robot arm 40 may position itself and ensure that it will grip the candidate plant 31 in the correct orientation.

As will discussed in further examples, the robot arm 40 may comprise a plurality of gripping members. In some examples, triggering the robot arm 40 to grip the candidate plant 31 comprises using the plurality of gripping members 41, e.g., to contract the plurality of gripping members or to pull the plurality of gripping members together.

As an example, triggering the robot arm 40 to grip the candidate plant 31 may further comprise triggering the robot arm 40 to lift the candidate plant 31.

### Action 206

The method may comprise while the candidate plant 31 is gripped by the plurality of gripping members 41, e.g., as discussed in action 205, triggering, one or more of the plurality of gripping members 41 to release and re-grip the candidate plant 31. The act may solve an issue that when gripping the candidate plant 31, there is a risk that more plants may be gripped and/or that plants or other materials may be entangled with the candidate plant 31. In this situations there may be a need to release and re-grip the candidate plant 31 which may cause other plants or materials to fall down. The release and re-grip of the candidate plant 31 may be triggered such that at least two gripping members 41 of the plurality of gripping members 41 maintain a grip of the candidate plant 31. This is to ensure that the candidate plant 31 itself is not dropped by the process.

Triggering the one or more gripping members 41 of the plurality of the gripping members 41 to release and re-grip the candidate plant 31 may comprise triggering each of the one or more gripping members 41 to, release and re-grip its respective grip of the candidate plant 31 with respect to a corresponding gripping member pair.

In other words, any of the gripping members 41 may open and close in any suitable pattern, as long as some grip of the candidate plant 31 is maintained.

According to embodiments, the plant handling arrangement may comprise two robot arms and the method may then comprise releasing and re-gripping the candidate plant 31 in that the release and re-grip of the candidate plant 31 may be triggered by the control unit 60 such that at least two gripping members 41 of one of the robot arms 40 maintain a grip of the candidate plant 31 while the other robot arm performs a re-grip of the candidate plant 31. This is to ensure that the candidate plant 31 itself is not dropped during the re-grip process.

In embodiments, the plant handling arrangement 1 comprises at least two robot arms 40 and the method may comprise the action of triggering at least two of the plurality of robot arms 40 to concurrently performed operations, for example triggering the at least two robot arms 40 to concurrently perform gripping operations or coating operations.

In embodiments, the plant handling arrangement 1 comprises at least two robot arms 40 and the method may comprise moving at least two of the plurality of robot arms 40 in opposition, for example moving the at least two robot arms 40 in opposition between a gripping area and a coating area and/or moving the at least two robot arms 40 in opposition between a coating area and a placement area. Each of the plurality of robot arms 40 may then comprise a plurality of gripping members 41.

### Action 207

The method may comprise triggering the robot arm 40 to carry the candidate plant 31 to the solid member 110 of the plant handling arrangement 1. The solid member 110 comprises the groove 111. In these examples, the method may further comprise moving the candidate plant 31 along a bottom-section of said groove 111. This movement may ensure that any entanglement of the candidate plant 31 may be brushed of by sides of the groove 111. The groove 111 may typically be V-shaped at a suitable angle, but U-shaped grooves or other shaped grooves may also apply to examples herein.

### Action 208

The method may comprise triggering the robot arm 40 to place the candidate plant 31 in the re-gripping area 120. This may be needed since the robot arm 40 may be subject to risks of having an imprecise grip after gripping the candidate plant as in action 205, e.g., due re-gripping the plant with the plurality of gripping members 41, and/or by entanglement in other plants when carrying and/or lifting the candidate plant 31 which may apply a force on the candidate plant 31.

The re-gripping area 120 may comprise a hollow area arranged for receiving at least part of the root 31r of the candidate plant 31 such that the candidate plant 31 will be arranged and rest in a predefined re-gripping position.

According to some examples, subsequent to placing the candidate plant 31 into the re-gripping area 120, the robot arm 40 may be triggered to adjust a position and/or orientation of the candidate plan 31 into the re-gripping area 120, e.g., by moving such as pushing or pressing the root 31r to align with a predefined re-gripping position of the re-gripping area 120. This is to ensure that the candidate plant 31 can be re-gripped with a firm and accurate grip of the robot arm 40. In particular, the robot arm 40 may be triggered to move, e.g., push or press, at least part of the root 31r to have a position and orientation which fulfils a predefined condition for being re-gripped. Depending on the species of plant and the re-gripping area 120, the procedure may look different, but according to these examples, it may be of importance to have the candidate plant 31, in particular the root 31r, to be positioned to lay fixed in a position such the robot arm 40 can re-grip the candidate plant 31. In particular, the root 31r may be arranged to lay at least partly in a hollow part of the re-gripping area 120, e.g., wherein parts of the root 31r is moved to be arranged such that different parts of the root 31r is overlapping on both sides of the solid member 110 such as by extending through the hollow part of the re-gripping area 120.

### Action 209

The method may comprise triggering the robot arm 40 to re-grip the candidate plant 31 in the re-gripping area 120. The re-grip may be performed based on a predefined position with respect to the re-gripping area 120, e.g., the predefined re-gripping position as discussed above.

### Action 210

The method may comprise obtaining second image data from at least one second camera 12 of the plant handling arrangement 1. The second image data may be indicative of the candidate plant 31 and the root 31r of the candidate plant 31. The second image data may further be indicative of a grip of the robot arm 40 with respect to the candidate plant 31. In particular, obtaining the second image data may be performed in response to the re-grip of the candidate plant as in action 209, but may also be performed to verify if the grip is deemed to be sufficient to be able to coat and place the candidate plant.

In embodiments, the method may then comprise the step of obtaining, by the control unit 60 and prior to coating the candidate plant 31, second image data indicative of the grip of the robot arm 40 with respect to the candidate plant 31, wherein said obtaining of the second image data is performed to verify if the grip is deemed to be sufficient to be able to coat and place the candidate plant 31 or in response to a re-grip of the candidate plant 31. The second image data may then be acquired by the at least one first camera 11 or may be acquired by the at least one second camera 12.

The control unit 60 may then be configured to obtain, prior to coating the candidate plant 31, second image data indicative of the grip of the robot arm 40 with respect to the candidate plant 31, wherein said obtaining of the second image data is performed by the control unit 60 to verify if the grip is deemed to be sufficient to be able to coat and place the candidate plant 31 or in response to a re-grip of the candidate plant 31. The second image data obtained by the control unit 60 may then be acquired by the at least one first camera 11 or may be acquired by the at least one second camera 12.

In embodiments and instead of obtaining second image data from at least one second camera 12, action 209 may comprise obtaining sensor data from at least one sensor of the plant handling arrangement 1. The obtained sensor data may then be indicative of the candidate plant 31 and the root of the candidate plant 31. The sensor data may further be indicative of a grip of robot arm 40 with respect to the candidate plant 31. In particular, obtaining the sensor data may be performed in response to a re-grip of the candidate plant as in action 209, but may also be performed to verify if the grip is deemed to be sufficient to be able to coat and place the candidate plant.

The control unit 60 may then be configured to obtain, from at least one sensor and prior to coating the candidate plant 31, sensor data indicative of the grip of the robot arm 40 with respect to the candidate plant 31, wherein said obtaining of the sensor data is performed by the control unit 60 to verify if the grip is deemed to be sufficient to be able to coat and place the candidate plant 31 or in response to a re-grip of the candidate plant 31. The sensor data obtained by the control unit 60 may then be acquired/obtained by at least one sensor of the plant handling arrangement 1.

### Action 211

The method may comprise based on the second image data, identifying a position of the root 31r of the candidate plant 31 relative to a gripping position of the robot arm 40. In some examples, a subsequent handling of the candidate plant 31 may be adjusted based on the identified position relative the gripping position of the robot arm 40. An orientation of the robot arm 40 may further be identified based on the second image data and handling of the candidate plant 31 may further be adjusted based on the orientation of the robot arm 40.

The method may in some examples comprise verify that there is a plant gripped by the robot arm 40, and to identify any error in orientation or angle of the grip, such that any further handling of the candidate plant 31 can be compensated by the error in orientation or angle of the grip of the robot arm 40.

The method may in some examples comprise, verifying, based the identified position of the root 31r relative to the gripping position of the robot arm 40 and/or based on the second image data, whether or not the gripping position and/or the orientation of the robot arm 40 fulfills a predefined position and/or orientation condition for the coating to be able to be performed.

If any of the verifications fail, a number of resolving actions may be performed such as any of:
- actions 208-209 may be performed,
- the candidate plant 31 may be dropped and the method may begin anew with identifying and gripping a new plant out of the plurality of plants 30, or
- the plant handling arrangement 1 may stop and an alert may be triggered.

### Action 212

The method may comprise triggering the robot arm 40 to carry the candidate plant 31 to the coating area 75 of the plant handling arrangement 1. The method may further comprise positioning the root 31r of the candidate plant 31 in a predefined position for applying a coating to the candidate plant 31.

In some examples, the method may comprise triggering the coating of the candidate plant 31 to be applied. Such triggering may comprise by using the robot arm 40 to dip the candidate plant 31 into a coating substance, e.g., wax, and/or to position the candidate plant 31 into an area where the coating substance, e.g., wax, is sprayed onto the candidate plant 31. According to some examples, the method may comprise controlling a nozzle of the coating area 75 for spraying the candidate plant 31 with the coating substance, e.g., by issuing instructions to a control unit controlling the nozzle. Alternatively, the coating area 75 may comprise a sensor for sensing when the candidate plant 31 is placed into the predefined position for applying the coating, and thereby triggering the coating to be applied, e.g., by activating spraying by the nozzle.

In some examples, the method may comprise any other suitable manner of applying the coating to the candidate plant 31.

Whether being dipped, sprayed, or otherwise coated, the coating may be applied to a predefined coating area of the candidate plant 31. The predefined coating area may be defined from a predefined distance from a bottom part of the root 31r, to a predefined distance above the root 31r, covering at least part of a stem of the candidate plant 31. The predefined coating area may leave at least part of the root 31r uncoated such that the root 31r can be planted and grow while still being protected from insects. A predefined part of the stem of the candidate plant 31 may be coated such that insects will not damage the candidate plant 31.

In some examples, triggering the robot arm 40 to carry the candidate plant 31 to the coating area 75 of the plant handling arrangement 1, and triggering to position the root 31r of the candidate plant 31 in the predefined position for applying the coating to the candidate plant 31 may be based on the identified position of the candidate plant 31 relative to the gripping position of the robot arm 40, e.g., as discussed in actions 210-211, and/or based on any adjustments as discussed in action 211.

### Action 213

The method may comprise triggering the robot arm 40 to place the candidate plant 31 in the placement area 25. Triggering the robot arm 40 to place the candidate plant 31 in the placement area 25 may comprise triggering the robot arm 40 to pack the candidate plant 31 among other plants in the placement area 25.

The placement area 25 may be a container such as a box.

Triggering the robot arm 40 to place the candidate plant 31 in the placement area 25 may be performed according to a predefined packing strategy. For example, when the method herein is iterated to iteratively and respectively grip, coat, and place, multiple of the plurality of plants 30, each respective plant may be placed in placement area 25 according to a set strategy such as having all plants oriented along the same direction, or by alternating the orientation in opposite directions for every second plant. The predefined packing strategy may be based on a characteristics of the placement area 25 and/or a future use case for the candidate plant 31.

In some examples herein, the method may further comprise selecting the placement area 25 from a number of alternative placement areas such as the alternative placement area 27. In some examples herein the placement area 25 and/or the alternative placement area placement area 27 may be situated in a section of a conveyor belt. In these situations, the method may comprise controlling the motion of the conveyor belt such that the placement area 25 and/or the alternative placement area placement area 27 is moved such that the robot arm 40 can reach placing the candidate plant 31 into the placement area 25 and/or the alternative placement area placement area 27.

In other words, in some examples, triggering the robot arm 40 to place the candidate plant 31 in the placement area 25 comprises triggering the robot arm 40 to place the candidate plant 31 in the placement area 25 based on a predetermined strategy indicative of an intended orientation and position of the candidate plant 31.

### Action 214

As discussed above, in some examples, the gripping area 20 is an area associated with a section of a conveyor belt 22. In some of these examples, the method may comprise, controlling a motion of the conveyor belt 22. This may be to move the plurality of plants towards the gripping area 20. Additionally or alternatively, the method may comprise selecting the gripping area 20 out of a number of alternative gripping areas, e.g., reachable by the robot arm 40 and/or in a field of view of the at least one first camera 11.

**Figs. 3a****-b** illustrates example of the candidate plant 31 and where the coating of the candidate plant 31 may be applied. The candidate plant 31 comprises as previously discussed, a root 31r. Thee candidate plant 31 may be gripped, e.g., in the gripping position as in action 205, which gripping position may be in a **predefined gripping area 302** of the candidate plant 31, e.g., a lower predefined portion of the root 31r, such that it is possible to have a firm grip of the candidate plant 31 without damaging the candidate plant 31, but also such that the candidate plant 31 can be positioned for coating part of the root 31r and part of a stem of the candidate plant 31, as illustrated by a predefined **coating area 301,** e.g., as also discussed in action 212. The predefined coating area 301 may be arranged between a center or other predefined position of the root 31r and to a predefined distance from the root 31r along the stem of the candidate plant 31. The predefined coating area 301 may be of a predefined length, or height of the candidate plant 31, typically 15-17 centimeters.

As indicated in Fig. 3 and as hinted in the discussion above, the predefined gripping area 302 may be at a set **minimum distance 303** from an end-point of the root 31r, typically the distance 303 is 1-2 centimeters from the end-point of the root 31r.

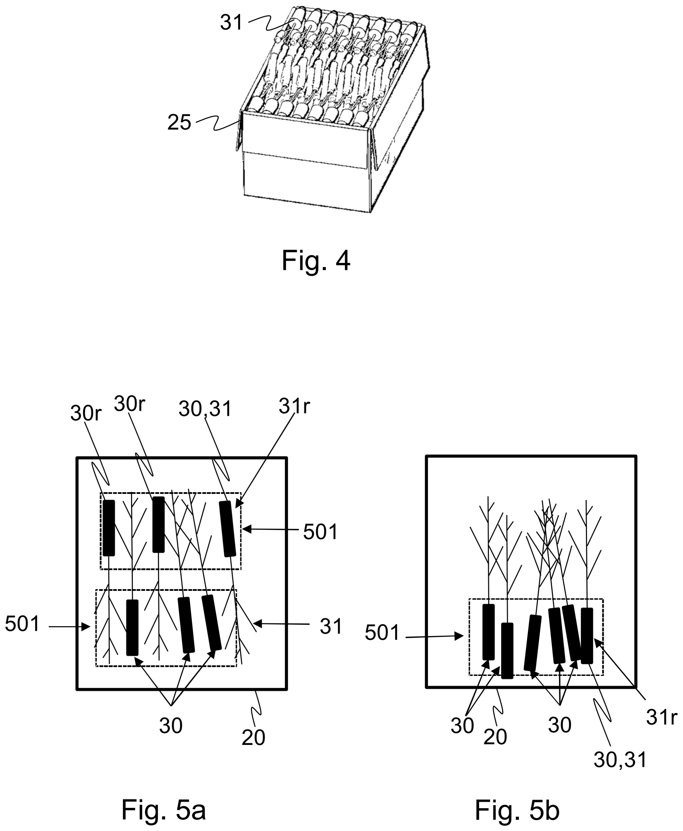

**Fig. 4** illustrates an example of the placement area 25, e.g., when the placement area 25 is a container. In this example, the candidate plant 31 have already been placed by the robot arm 40, e.g., as in action 213, in the placement area 25 according to a predefined packing strategy, e.g., by placing roots in opposing sides of the container of the placement area 25.

**Figs. 5a****-b** illustrates and example of the first image data, e.g., as in action 201. The first image data may comprise a photo, image representation, and/or other image data of the gripping area 20 wherein the plurality of plants 30 are present, including the to-be identified candidate plant 31, and in particular the root 31r of the candidate plant 31. To improve and/or to speed up the identification, the candidate plant 31 and/or the root 31r, may be identified e.g., as in action 202, from **one or more areas 501** of the gripping area 20. The one or more areas 501 may be areas where the root 31r is likely to lay and may first be searched for identifying the root 31r. The one or more areas 501 may be identified by having a dense amount of plant material and/or may be predefined areas.

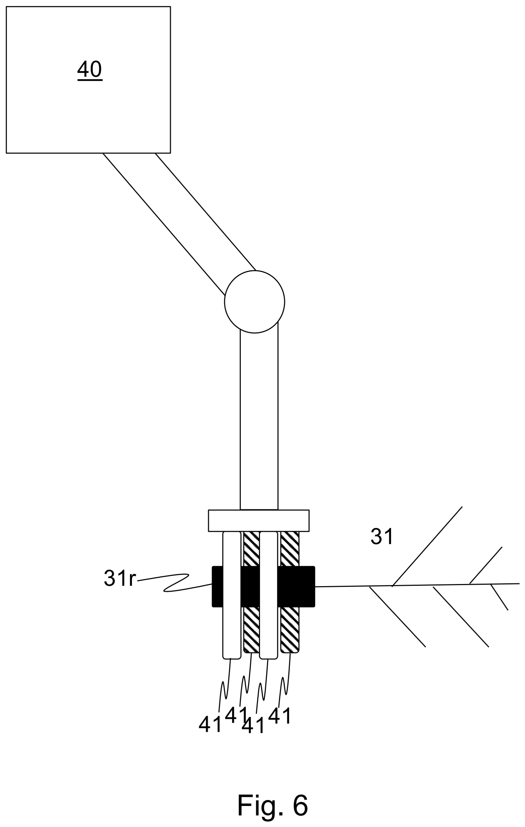

**Fig. 6** is a diagram illustrating an example of the robot arm 40. The robot arm 40 may be suspended from, and/or mounted at, a position vertically above the gripping area 20 and the placement area 25. The robot arm 40 may be able to grip the candidate plant 31 such as at the root 31r. To grip the candidate plant 31, the robot arm 40 may comprise a plurality of **gripping members 41.** The gripping members may be jointed members or any suitable members which, when gripping, may be closed to grip the candidate plant 31. The plurality of gripping members 41 may typically be an even number, 4 or 6, such that after gripping the candidate plant 31, as also discussed in action 206, the plurality of gripping members 41 may release and re-grip pairwise such that anything stuck or entangled with the candidate plant 31 may drop, and such that the grip of the candidate plant 31 may still be maintained by the remaining gripping members 41.

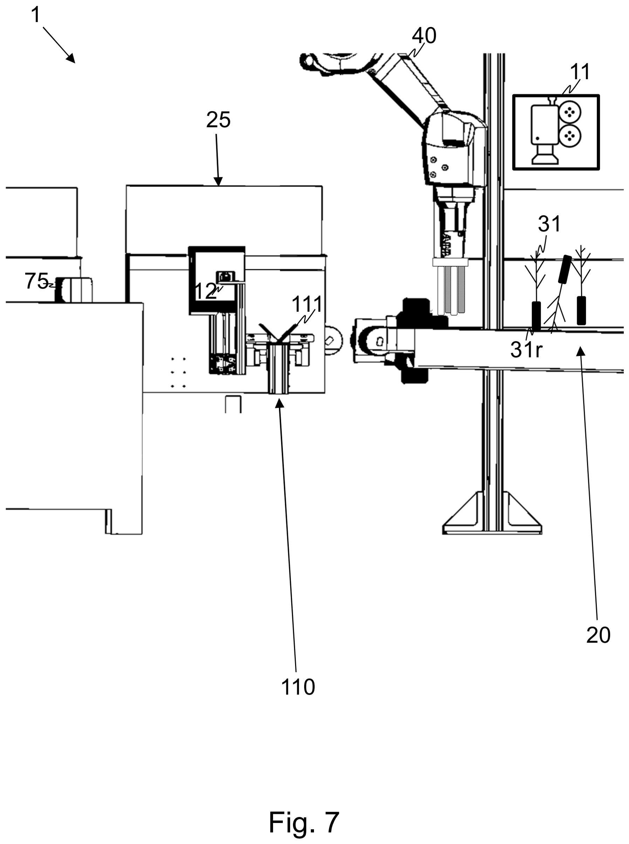

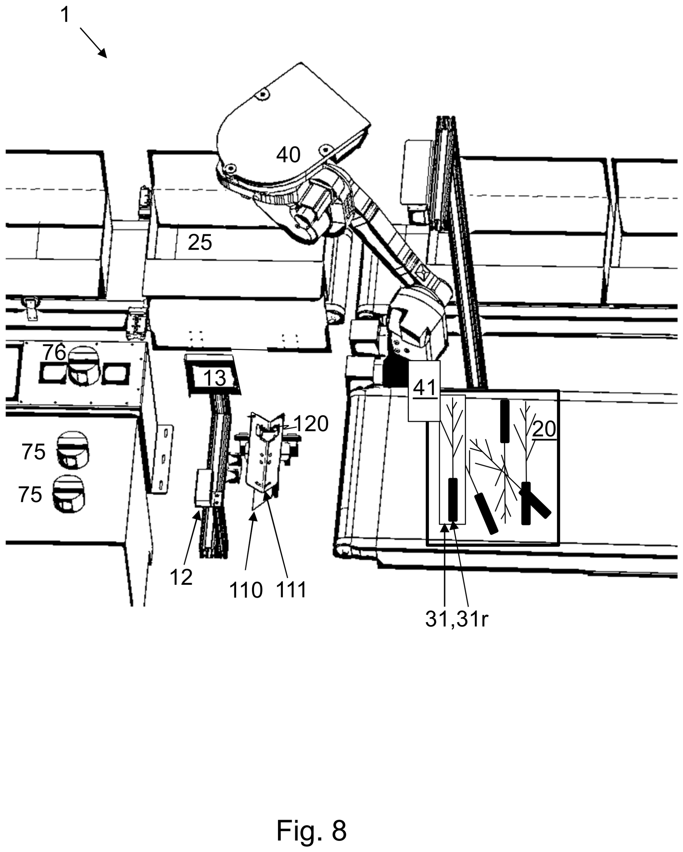

**Fig. 7** is an example illustration of the plant handling arrangement 1. **Fig. 8** is the same example but illustrated at a different angle. In this example the at least one first camera 11 is a single camera pointing down towards the gripping area 20 such that the at least one first camera 11 can obtain the first image data for identifying the candidate plant 31 and its root 31r. The robot arm 40 may be arranged within a set distance of the gripping area 20 such that it may be able to reach for gripping the candidate plant 31. The robot arm 40 may further be arranged within a set distance of the coating area 75, the cooling area 26, the solid member 110 and the placement area 25 such that it may reach in carrying the candidate plant 31 into these respective areas. The solid member 110 and its groove 110 is seen from the side, such that it can be illustrated that the groove may be V-shaped. After moving the candidate plant through the groove 110, and re-gripped in the re-gripping area 120 (not visualized at the angle of Fig. 7), the robot arm 40 may move and hold the candidate plant 31 in front of the at least one second camera 12 to ensure or verify that the robot arm 40 is gripping the candidate plant 31 according to a predefined condition for being able to coat the candidate plant 31. The candidate plant 31 may be held in front of a screen 13 which may improve the second image data for more accurately ensuring or verifying the grip of the robot arm 40.

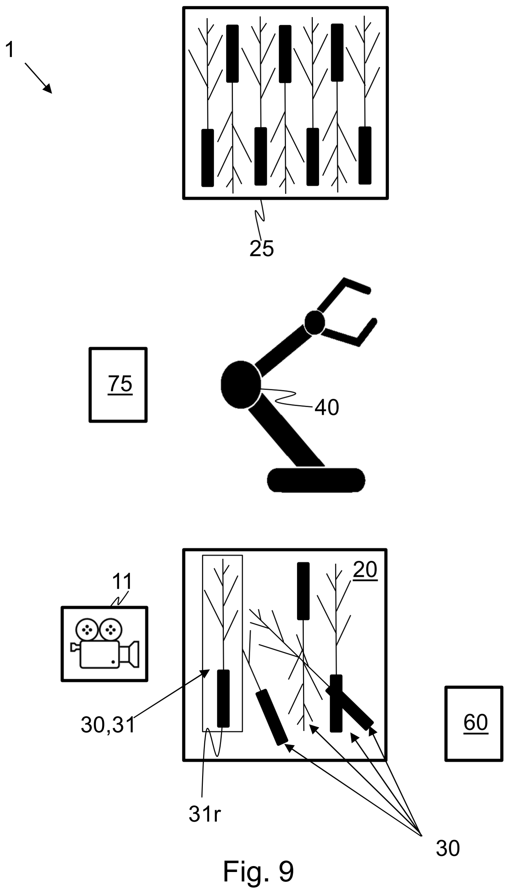

**Fig. 9** is another example of the plant handling arrangement 1 and the control unit 60. The control unit 60 is configured to handle plants in the plant handling arrangement 1. The plant handling arrangement 1 comprises the robot arm 40 for gripping plants from the gripping area 20 of the plant handling arrangement 1. The plant handling arrangement comprises the at least one first camera 11 for monitoring the gripping area 20. The plurality of plants 30 are present within the gripping area 20.

The control unit 60 is further be configured to obtain, e.g., by an obtaining unit comprised in the control unit 60, first image data from the at least one first camera 11, the first image data being indicative of the gripping area 20. The control unit 60 is further be configured to, identify, e.g., by an identifying unit comprised in the control unit 60, based on the obtained first image data, a candidate plant 31 among the plurality of plants 30. The control unit 60 is further be configured to, identify, e.g., by an identifying unit comprised in the control unit 60, based on the obtained first image data, a root 31r of the candidate plant 31. The control unit 60 is further be configured to, determine, e.g., by a determining unit comprised in the control unit 60, a gripping position of the identified candidate plant 31, the gripping position being a position of the root 31r of the candidate plant 31 or a position relative to the root 31r of the candidate plant 31. The control unit 60 is further be configured to, trigger, e.g., by an triggering unit comprised in the control unit 60, the robot arm 40 to grip the candidate plant 31 based on the determined gripping position. The control unit 60 is further be configured to, trigger, e.g., by an triggering unit comprised in the control unit 60, the robot arm 40 to carry the candidate plant 31 to a coating area 75 of the plant handling arrangement 1, and to position the root 31r of the candidate plant 31 in a predefined position for applying a coating to the candidate plant 31. The control unit 60 is further be configured to, trigger, e.g., by an triggering unit comprised in the control unit 60, the robot arm 40 to place the candidate plant 31 in a placement area 25.

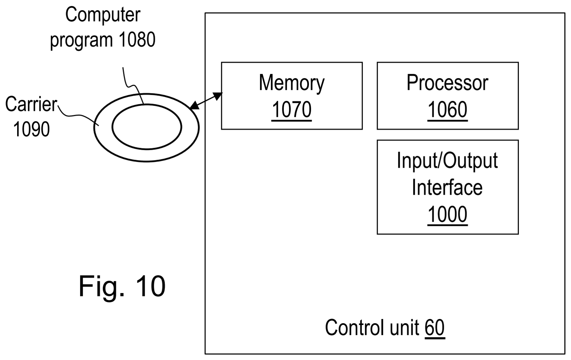

**Fig. 10** illustrates further examples of the control unit 60. To perform the method actions and examples above, the control unit 60 may be configured to control and/or communicate with any of the entities described above in any suitable manner. The components of the control units 60 may be directly integrated into the plant handling arrangement 1 in any suitable manner, or may be remote to the plant handling arrangement 1, e.g., as a cloud service or part of a server controlling the plant handling arrangement 1.

The control unit 60, may comprise **an input and output interface 1000** configured to communicate with and/or to control entities of the plant handling arrangement 1, e.g., any one or more out of: the at least one first camera 11, the at least one second camera 12, the robot arm 40, the plurality of gripping members, coating actuators such as nozzles for spraying wax in the coating area 75, conveyor belts, etc. The input and output interface 1000 may e.g., comprise a wired or wireless receiver (not shown) and a wireless or wired transmitter (not shown).

The control unit 60 may further be configured to perform the method according to any of the above-mentioned actions or examples, e.g., by using a **processor 1060** of the control unit 60.

The embodiments herein may be implemented through a processor such as the processor 1060 of a processing circuitry of the control unit 60, together with respective computer program code for performing the functions and actions of the embodiments herein. The program code mentioned above may also be provided as a computer program e.g., a computer program product, for instance in the form of a data carrier carrying computer program code for performing the embodiments herein when being loaded into the control unit 60. One such carrier may be in the form of a CD ROM disc. It is however feasible with other data carriers such as a memory stick. The computer program code may furthermore be provided as pure program code on a server and downloaded to the control unit 60. The processor 1060 may be described as one processor, but further additional processors may also be part of the control unit 60 for performing the examples herein.

The control unit 60, may further comprise a **memory 1070** comprising one or more memory units. The memory 1070 comprises instructions executable by the processor in the control unit 60. The memory 1070 is arranged to be used to store e.g. information, indications, data, configurations, and applications to perform the methods herein when being executed in the control unit 60.

In some embodiments, a **computer program 1080** comprises instructions, which when executed by the processor 1060, cause the processor of the control unit 60, to perform the actions above.

In some embodiments, a respective **carrier 1090** comprises the respective computer program 1080, wherein the carrier 1090 is one of an electronic signal, an optical signal, an electromagnetic signal, a magnetic signal, an electric signal, a radio signal, a microwave signal, or a computer-readable storage medium.

In aspects, the technology disclosed relates to plant handling arrangement and method for identifying, gripping, transporting, coating, and placing plants using image-based analysis and multi-arm robotic coordination. Automated systems for handling horticultural products have become increasingly important as growers seek to improve efficiency and reduce labour dependency.

Traditional robotic plant handling systems often exhibit limited throughput and may suffer from inefficiencies due to bottlenecking around individual processing steps. Variability in plant orientation and root exposure can result in incorrect gripping, misalignment during coating, and reduced accuracy in plant placement. These limitations underscore the need for improved systems capable of identifying plant characteristics dynamically, coordinating multiple robotic manipulators, and ensuring sufficient gripping force and precision.

According to embodiments, the technology disclosed addresses the above drawbacks with traditional robotic plant handling systems by introducing a plant handling arrangement that incorporates a plurality of robot arms capable of and configured to operate concurrently, for example arranged and configured to concurrently perform operations such as gripping or coating of a candidate plant and/or arranged and configured to move in opposition between at least two processing areas, including a gripping area, coating area, and placement area. Each robot arm may then include multiple gripping members, enabling simultaneous multi-plant handling.

In aspects, the technology disclosed relates to a plant handling arrangement comprising:
a plurality of robot arms, each robot arm including at least one gripping member;
at least one first camera configured to obtain first image data indicative of a gripping area comprising a plurality of plants;
a control unit configured to:
   (a) identify, based on the first image data and for each of the plurality of robot arms, a candidate plant among the plurality of plants;
   (b) identify, based on the first image data and for each of the plurality of robot arms, a root of the candidate plant;
   (c) determine, for and for each of the plurality of robot arms, a gripping position corresponding to the root or a position relative to the root; and
   (d) trigger each of the plurality of robot arms to grip their respective identified candidate plant based on their respective identified gripping position and to transport the candidate plant to a coating area.

In embodiments, the plurality of robot arms are arranged to move in opposition between the gripping area and the coating area.

In embodiments, the plurality of robot arms are arranged to move in opposition between the coating area and a placement area.

In embodiments, the plurality of robot arms are arranged to move in opposition between the griping area and a placement area.

In embodiments, at least one robot arm comprises a plurality of gripping members.

In embodiments, the control unit is further configured to trigger the robot arm to position the root of the candidate plant at a predefined location within the coating area.

In embodiments, the plant handling arrangement further comprises at least one camera or sensor configured to obtain a second set of data indicative of a grip condition of each of the robot arms or gripping members with respect to the candidate plant. The second set of data may then comprise image data acquired by the at least one first camera or at least one second camera, sensor data obtained by at least one sensor, or both. The control unit may be further configured to determine whether the grip is sufficient for coating or placement based on the second set of data.

In aspects, the technology disclosed relates to a method for handling plants in a plant handling arrangement comprising a plurality of robot arms each provided with gripping members, comprising:
obtaining, by at least one first camera, first image data indicative of a gripping area comprising a plurality of plants;
identifying, based on the first image data, a candidate plant and a root of the candidate plant for each of the plurality of robot arms;
determining, each of the plurality of robot arms, a gripping position corresponding to the root or a position relative thereto;
triggering, each of the plurality of robot arms, to grip their respective candidate plants based on their respective gripping position; and
triggering each of the plurality of robot arms to transport the candidate plant to a coating area and position the root for coating.

In embodiments, the above method for handling plants in a plant handling arrangement comprising a plurality of robot arms comprises the step of operating at least two of the plurality of robot arms concurrently, for example the at least two robot arms are configured to concurrently perform operations such as gripping of candidate plants and/or coating of candidate plants.

In embodiments, the above method for handling plants in a plant handling arrangement comprising a plurality of robot arms comprises the step of moving at least two of the plurality of robot arms in opposition between at least two processing areas, including a gripping area, coating area, and placement area. Each robot arm may then include multiple gripping members, enabling simultaneous multi-plant handling.

In embodiments, the above method for handling plants in a plant handling arrangement comprising a plurality of robot arms comprises triggering, by the control unit, at least two of the plurality of robot arms to move in opposition between at least two processing areas, including a gripping area, coating area, and placement area. Each robot arm may then include multiple gripping members, enabling simultaneous multi-plant handling.

In embodiments, the above method for handling plants in a plant handling arrangement comprising a plurality of robot arms comprises moving at least two of the plurality of robot arms in opposition between the gripping area and the coating area.

In embodiments, the above method for handling plants in a plant handling arrangement comprising a plurality of robot arms comprises moving at least two of the plurality of robot arms in opposition between the coating area and a placement area.

In embodiments, the above method for handling plants in a plant handling arrangement comprising a plurality of robot arms comprises moving at least two of the plurality of robot arms in opposition between a gripping area and a placement area.

In embodiments, the above method for handling plants in a plant handling arrangement comprising a plurality of robot arms comprises obtaining, for each of the plurality of robot arms in sequence, a second set of data indicative of a grip of each of the plurality of robot arms with respect to their respective candidate plant.

In embodiments, the above method for handling plants in a plant handling arrangement comprising a plurality of robot arms comprises obtaining, for each of the plurality of robot arms in sequence, a second set of data to verify grip sufficiency or in response to a re-grip operation by the respective robot arms.

Those skilled in the art will appreciate that the units in the control unit 60 as described above may refer to a combination of analog and digital circuits, and/or one or more processors configured with software and/or firmware, e.g. stored in the control unit 60, that when executed by the respective one or more processors such as the processor described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

The embodiments herein are not limited to the above described preferred embodiments. Various alternatives, modifications and equivalents may be used. Any embodiments and/or examples mentioned above may be used in any suitable combination with any other one or more embodiments and/or examples above. When using the word "comprise" or "comprising" it shall be interpreted as non- limiting, i.e. meaning "consist at least of".

## Claims

1. A method for handling plants in a plant handling arrangement (1), the plant handling arrangement (1) comprising a robot arm (40) for gripping plants from a gripping area (20) of the plant handling arrangement (1) and at least one first camera (11) for monitoring the gripping area (20), wherein a plurality of plants (30) are present within the gripping area (20), the method comprising:
- obtaining (201) first image data from the at least one first camera (11), the first image data being indicative of the gripping area (20),
- identifying (202a), based on the obtained first image data, a candidate plant (31) among the plurality of plants (30),
- identifying (202b), based on the obtained first image data, a root (31r) of the candidate plant (31),
- determining (203) a gripping position of the identified candidate plant (31), the gripping position being a position of the root (31r) of the candidate plant (31) or a position relative to the root (31r) of the candidate plant (31),
- triggering (205) the robot arm (40) to grip the candidate plant (31) based on the determined gripping position,
- triggering (212) the robot arm (40) to carry the candidate plant (31) to a coating area (75) of the plant handling arrangement (1), and to position the root (31r) of the candidate plant (31) in a predefined position for applying a coating to the candidate plant (31); and
- triggering (213) the robot arm (40) to place the candidate plant (31) in a placement area (25).

2. The method of claim 1 further comprising:
- determining (204), based on the first image data and the gripping position, a robot arm (40) position and robot arm (40) orientation for the robot arm (40) to assume when gripping the candidate plant (31), and
- triggering (205) the robot arm (40) to grip the candidate plant (31) based on the determined robot arm (40) position and robot arm (40) orientation.

3. The method according to any of the preceding claims, wherein identifying (203) the candidate plant (31) comprises identifying a predetermined plant shape from the first image data.

4. The method of any of the preceding claims, wherein the robot arm (40) comprises a plurality of gripping members (41), and wherein the method comprises triggering (205) the robot arm (40) to grip the candidate plant (31) by using the plurality of gripping members (41), the method further comprising:
- triggering (206), while the candidate plant (31) is gripped by the plurality of gripping members (41), one or more of the plurality of gripping members (41) to release and re-grip the candidate plant (31), wherein the release and re-grip of the candidate plant (31) is triggered such that at least two gripping members (41) of the plurality of gripping members (41) maintain a grip of the candidate plant (31).

5. The method of claim 4, wherein triggering (206) the one or more gripping members (41) of the plurality of the gripping members (41) to release and re-grip the candidate plant (31) comprises triggering each of the one or more gripping members (41) to, release and re-grip its respective grip of the candidate plant (31) with respect to a corresponding gripping member pair.

6. The method of any of the preceding claims, further comprising triggering (207) the robot arm (40) to carry the candidate plant (31) to a solid member (110) of the plant handling arrangement (1), which solid member (110) comprises a groove (111), and to move the candidate plant (31) along a bottom-section of said groove (111).

7. The method of any of the preceding claims, further comprising
- triggering (208) the robot arm (40) to place the candidate plant (31) in a re-gripping area (120),
- triggering (209) the robot arm (40) to re-grip the candidate plant (31) in the re-gripping area (120),
- obtaining (210) second image data from at least one second camera (12) of the plant handling arrangement (1), the second image data being indicative of the candidate plant (31) and the root (31r) of the candidate plant (31),
- identifying (211), based on the second image data, a position of the root (31r) of the candidate plant (31) relative to a gripping position of the robot arm (40), and
- wherein triggering (212) the robot arm (40) to carry the candidate plant (31) to the coating area (75) of the plant handling arrangement (1), and to position the root (31r) of the candidate plant (31) in the predefined position for applying the coating to the candidate plant (31) is based on the identified position of the candidate plant (31) relative to the gripping position of the robot arm (40).

8. The method according to any of the preceding claims, wherein triggering (213) the robot arm (40) to place the candidate plant (31) in the placement area (25) comprises triggering the robot arm (40) to place the candidate plant (31) in the placement area (25) based on a predetermined strategy indicative of an intended orientation and position of the candidate plant (31).

9. The method according to any of the preceding claims, wherein the gripping area (20) is an area associated with a section of a conveyor belt (22), and wherein the method further comprises controlling (214) a motion of the conveyor belt (22).

10. A control unit (60) configured to handle plants in a plant handling arrangement (1), the plant handling arrangement (1) comprising a robot arm (40) for gripping plants from a gripping area (20) of the plant handling arrangement (1) and at least one first camera (11) for monitoring the gripping area (20), wherein a plurality of plants (30) are present within the gripping area (20), the control unit (60) being configured to:
- obtain first image data from the at least one first camera (11), the first image data being indicative of the gripping area (20),
- identify, based on the obtained first image data, a candidate plant (31) among the plurality of plants (30),
- identify, based on the obtained first image data, a root (31r) of the candidate plant (31),
- determine a gripping position of the identified candidate plant (31), the gripping position being a position of the root (31r) of the candidate plant (31) or a position relative to the root (31r) of the candidate plant (31),
- trigger the robot arm (40) to grip the candidate plant (31) based on the determined gripping position,
- trigger the robot arm (40) to carry the candidate plant (31) to a coating area (75) of the plant handling arrangement (1), and to position the root (31r) of the candidate plant (31) in a predefined position for applying a coating to the candidate plant (31); and
- trigger the robot arm (40) to place the candidate plant (31) in a placement area (25).

11. A control unit (60) configured to perform the method of any of claims 2-9.

12. A plant handling arrangement (1) comprising a robot arm (40) for gripping plants from a gripping area (20) of the plant handling arrangement (1) and at least one first camera (11)for monitoring the gripping area (20), and wherein the plant handling arrangement (1) comprises and/or is controlled by the control unit (60) of any of claims 10-11.

13. The plant handling arrangement (1) of claim 12 wherein the robot arm (40) is suspended from a location above the gripping area (20).

14. The plant handling arrangement (1) of claim 12 or 13 wherein the gripping area (20) is an area associated with a section of one or more conveyor belts of the plant handling arrangement (1).

15. A computer program (1080) comprising instructions, which when executed by a processor (1060), causes the processor to perform actions according to any of the claims 1-9.

16. A carrier (1090) comprising the computer program (1080) of claim 15, wherein the carrier is one of an electronic signal, an optical signal, an electromagnetic signal, a magnetic signal, an electric signal, a radio signal, a microwave signal, or a computer-readable storage medium.
